# EUROPÄISCHE PATENTSCHRIFT

(11) **EP 3 227 372 B1**
(45) Veröffentlichungstag und Bekanntmachung des Hinweises auf die Patenterteilung: **01.05.2019**
(21) Anmeldenummer: 15805146.6
(22) Anmeldetag: 02.12.2015
(51) Int. Cl.: C08K 5/06, C08G 18/08, C08G 18/42, C08J 3/03, C09J 175/04

(54) **WÄSSRIGE KLEBSTOFFDISPERSION ENTHALTEND POLYURETHANE UND ETHOXYLIERTE FETTALKOHOLE**
AQUEOUS ADHESIVE DISPERSION CONTAINING POLYURETHANES AND ETHOXYLATED FATTY ALCOHOLS
DISPERSION AQUEUSE DE MATIÈRES ADHÉSIVES CONTENANT DU POLYURÉTHANE ET DES ALCOOLS GRAS ÉTHOXYLÉS

(30) Priorität: 05.12.2014 EP 14196561
(43) Veröffentlichungstag der Anmeldung: 11.10.2017
(73) Patentinhaber: BASF SE, 67056 Ludwigshafen am Rhein (DE)
(72) Erfinder: SCHUMACHER, Karl-Heinz, 67433 Neustadt (DE); SANDERS, Gemma, 68165 Mannheim (DE); SIMANCAS, Kimberly, 70372 Stuttgart (DE); HARTZ, Oliver, 67117 Limburgerhof (DE)
(74) Vertreter: BASF IP Association
(86) Internationale Anmeldenummer: PCT/EP2015/078370
(87) Internationale Veröffentlichungsnummer: WO 2016/087518

(56) Entgegenhaltungen:
- EP-A1- 2 166 057
- EP-A1- 2 359 805
- WO-A1-2016/016286
- US-A1- 2005 080 203

## Beschreibung

Die Erfindung betrifft wässrige Klebstoffdispersionen, enthaltend bestimmte dispergierte Polyurethane sowie ethoxylierte Fettalkohole als Emulgatoren. Die Klebstoffdispersionen können als Kaschierklebstoffe, z.B. zur Verbundfolienkaschierung verwendet werden.

Die kolloidale Stabilität wässeriger Polyurethandispersionen wird üblicherweise durch die Copolymerisation von Verbindungen mit ionogenen Gruppen oder durch den Einbau von in ionogene Gruppen überführbare Funktionen, z.B. Carbonsäuregruppen oder Sulfonsäuregruppen erzeugt. Beispiele sind Kettenverlängerer wie das Natriumsalz von Ethylendiaminmonopropionsäure oder das Natriumsalz von Ethylendiaminmonoethansulfonsäure oder der Einbau von Dimethylolpropionsäure (DMPA) mit nachfolgender Neutralisation der Carboxylfunktion. Derartige wässrige Polyurethandispersionen werden z.B. beschrieben in WO 2007/028760, WO 06/087348 oder WO 06/087317. Die auf diese Weise erzielbare kolloidale Stabilität der Dispersionen ist für viele technische Klebstoffanwendungen ausreichend. In einigen Anwendungsprozessen aber, in denen hohe Scherkräfte auf die Dispersion wirken, z.B. in Auftragsprozessen mit Walzensystemen oder in scherintensiven Pumpvorgängen, kommt es jedoch häufig aufgrund mangelnder kolloidaler Stabilität zur Koagulatbildung so stabilisierter Dispersionen, was die industrielle Anwendung beeinträchtigt. Dieses Problem tritt verstärkt auf, wenn die Polyurethandispersion zusätzlich einer erhöhten Elektrolytkonzentration ausgesetzt ist, z.B. beim Verdünnen mit hartem Wasser oder der Formulierung mit ionenreichen Additiven.

Die Aufgabe der Erfindung bestand darin, die Scherstabilität und/oder die Elektrolytstabilität wässeriger Polyurethandispersionen insbesondere für Klebstoffanwendungen signifikant zu erhöhen, um die beschriebenen Probleme bei der Applikation möglichst zu vermeiden. Dabei sollten sich die übrigen, erwünschten anwendungstechnischen Eigenschaften der Klebstoffdispersionen, insbesondere die Klebeeigenschaften und das Schaumverhalten, möglichst nicht ändern. Eine erheblich erhöhte Neigung zur Schaumbildung kann zu Applikationsproblemen führen, z.B. zu Störungen im Beschichtungsbild durch angetrockneten Schaum, was nach Möglichkeit vermieden werden sollte.

Als Problemlösung wurde gefunden, dass durch Zusatz von z.B. 0,5-2 Gew.% (bezogen auf Feststoffgehalt) mindestens eines Fettalkoholethoxylates sowohl die Scherstabilität als auch die Elektrolytstabilität der Dispersion erheblich verbessert werden können, ohne die Schaumentwicklung der Dispersion bei der Verarbeitung nennenswert zu erhöhen und ohne die klebtechnischen Eigenschaften unakzeptabel zu verschlechtern.

Gegenstand der Erfindung ist eine wässrige Klebstoffdispersion, enthaltend
a) mindestens ein dispergiertes Polyurethan, aufgebaut aus
   a1) mindestens einem organischen Diisocyanat, ausgewählt aus Diisocyanaten der Formel X(NCO)₂, wobei X für einen nicht-cyclischen aliphatischen Kohlenwasserstoffrest mit 4 bis 15 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder für einen araliphatischen Kohlenwasserstoffrest mit 7 bis 15 Kohlenstoffatomen steht,
   a2) mindestens einer Dihydroxyverbindung ausgewählt aus Polyesterdiolen und Polyetherdiolen, wobei die Polyesterdiole gebildet sind aus mindestens einer aliphatischen Dicarbonsäure und mindestens einem Alkandiol und die Polyetherdiole ausgewählt sind aus Polypropylenoxid und Polytetrahydrofuran,
   a3) mindestens einer Verbindung mit wenigstens einer gegenüber Isocyanatgruppen reaktiven Gruppe, die zusätzlich mindestens eine ionische Gruppe oder eine in eine ionische Gruppe überführbare Gruppe trägt,
   a4) optional weiteren von a1) bis a3) verschiedenen Verbindungen,
      und
b) mindestens einen nichtionischen Emulgator, ausgewählt aus ethoxylierten Fettalkoholen.

Geeignete Diisocyanate a1) sind z.B. Tetramethylendiisocyanat, Hexamethylendiisocyanat (HDI), Dodecamethylendiisocyanat, 1,4-Diisocyanatocyclohexan, 5-Isocyanato-1-(isocyanatomethyl)-1,3,3-trimethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol (TDI), 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische. Derartige Diisocyanate sind im Handel erhältlich. Besonders bevorzugt ist das Diisocyanat a1) ausgewählt ist aus der Gruppe bestehend aus Hexamethylendiisocyanat, 5-Isocyanato-1-(isocyanatomethyl)-1,3,3-trimethylcyclohexan, 2,6-Diisocyanatotoluol und Tetramethylxylylendiisocyanat oder deren Mischung.

Als Gemische dieser Diisocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Die Dihydroxyverbindungen a2) haben vorzugsweise ein zahlenmittleres Molgewicht von 500 bis 5000 g/mol, vorzugsweise von 1000 bis 3000 g/mol. Die Dihydroxyverbindungen a2) enthalten vorzugsweise keine ionische oder in eine ionische Gruppe überführbare Gruppe.

Bei den Dihydroxyverbindungen a2) kann es sich um Polyesterdiole handeln. Bevorzugt werden Polyesterdiole eingesetzt, die durch Umsetzung von zweiwertigen Alkoholen mit zweiwertigen Carbonsäuren erhalten werden. Anstelle der freien Dicarbonsäuren können auch die entsprechenden Dicarbonsäureanhydride oder entsprechende Dicarbonsäureester von niederen Alkoholen (Alkohole mit 1 bis 4 C-Atomen) oder deren Gemische zur Herstellung der Polyesterdiole verwendet werden. Die Dicarbonsäuren sind aliphatisch. Bevorzugt sind Dicarbonsäuren der allgemeinen Formel
HOOC-(CH₂)_{y}-COOH, wobei y eine Zahl von 1 bis 20, bevorzugt eine gerade Zahl von 2 bis 20 ist, z. B. Bernsteinsäure, Adipinsäure, Sebacinsäure und Dodecandicarbonsäure. Besonders bevorzugt ist Adipinsäure.

Als Alkandiole kommen z. B. Ethylenglykol, Propan-1,2- diol, Propan-1,3-diol, Butan-1,3-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Dialkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol, Dodecan-1,12-diol und Neopentylglykol. Besonders bevorzugt sind Butan-1,4-diol und Hexan-1,6-diol.

Bei den Dihydroxyverbindungen a2) kann es sich um Polyetherdiole handeln, ausgewählt sind aus Polypropylenoxid und Polytetrahydrofuran. Die Polyetherdiole sind insbesondere durch Polymerisation von Propylenoxid bzw. Tetrahydrofuran mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, 2,2-Bis(4-hydroxyphenyl)-propan oder Anilin erhältlich. Ein geeignetes Polytetrahydrofuran hat z.B. ein zahlenmittleres Molekulargewicht von 240 bis 5000 g/mol oder von 500 bis 5000 g/mol oder von 500 bis 4500 g/mol.

Vorzugsweise ist das Polyurethan gebildet aus mindestens 50 Gew.-%, besonders bevorzugt mindestens 85 Gew.-% ganz besonders bevorzugt mindestens 95 Gew.-% bzw. aus 100 Gew.-%, bezogen auf sämtliche Dihydroxyverbindungen, aus den Polyesterdiolen oder Polyetherdiolen a2). Es können auch Mischungen der oben genannten Polyesterdiole und Polyetherdiole eingesetzt werden. Bevorzugte Dihydroxyverbindungen a2) sind die oben genannten Polyesterdiole. Besonders bevorzugt sind Adipinsäure-Butandiol-Polyester und Adipinsäure-Hexandiol-Polyester.

Um die Wasserdispergierbarkeit der Polyurethane zu erreichen, sind die Polyurethane aus Verbindungen(a3) aufgebaut, die wenigstens eine gegenüber Isocyanatgruppen reaktive Gruppe und darüber hinaus wenigstens eine anionische Gruppe haben. Als anionische Gruppe werden erfindungsgemäß auch Säuregruppen verstanden, welche durch Neutralisierung in eine anionische Gruppe überführt werden können. Bei den anionischen Gruppen handelt es sich insbesondere um die Sulfonat-, Carboxylat- und die Phosphatgruppe bzw. um die entsprechenden Carbonsäure, Sulfonsäure und Phosphorsäuregruppen. Verbindung a3) ist vorzugsweise ausgewählt aus Dihydroxycarbonsäuren, Diaminocarbonsäuren und Diaminosulfonsäuren. Der Anteil der Komponenten mit anionischen Gruppen an der Gesamtmenge der Aufbaukomponenten des Polyurethans wird vorzugsweise so bemessen, dass die Molmenge der anionischen Gruppen, bezogen auf die Gewichtsmenge aller Monomere (a1) bis (a4), 30 bis 1000 mmol/kg, oder 50 bis 800 mmol/kg, oder 50 bis 500 mmol/kg und besonders bevorzugt 80 bis 300 mmol/kg Polyurethan beträgt.

Als Monomere mit anionischen Gruppen, bzw. mit Säuregruppen, welche durch Neutralisierung in eine anionische Gruppe überführt werden, kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen.

Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel (C₁) 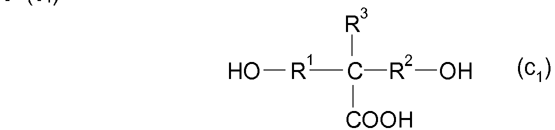 in welcher R¹ und R² für eine C₁- bis C₄-Alkandiyl-Einheit und R³ für eine C₁- bis C₄-Alkyl-Einheit steht und vor allem Dimethylolpropionsäure (DMPA) bevorzugt.

Weiterhin eignen sich entsprechende Dihydroxyalkylsulfonsäuren und Dihydroxyalkylphosphonsäuren wie z.B. 2,3-Dihydroxypropanphosphonsäure. Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die hierin genannten Diole geeignet.

Als Verbindungen a3) mit gegenüber Isocyanaten reaktiven Aminogruppen kommen Aminocarbonsäuren wie Lysin, ß-Alanin oder die in der DE-A 2034479 genannten Addukte von aliphatischen diprimären Diaminen an α,β-ungesättigte Carbon- oder Sulfonsäuren in Betracht. Solche Verbindungen gehorchen beispielsweise der Formel (C₂)

H₂N-R⁴-NH-R⁵-X (C₂)

in der R⁴ und R⁵ unabhängig voneinander für eine C₁- bis C₆-Alkandiyl-Einheit, bevorzugt für Ethylen und X für COOH oder SO₃H stehen. Besonders bevorzugte Verbindungen der Formel c2 sind die N-(2-Aminoethyl)-2-aminoethancarbonsäure, bzw. die N-(2-Aminoethyl)-2-aminoethansulfonsäure.

Weiterhin bevorzugt sind die Addukte der oben genannten aliphatischen diprimären Diamine an 2-Acrylamido-2-methylpropansulfonsäure, wie sie z.B. in der DE Patentschrift 1 954 090 beschrieben sind. Ebenfalls gut geeignete Verbindungen a3 sind Addukte von aliphatischen Diaminen, beispielsweise Ethylendiamin, oder Propylendiamin an Acrylate oder Methacrylate.

Die anionischen Gruppen des Polyurethans sind zu mindestens 10 Mol %, vorzugsweise zu mindestens 40 Mol%, besonders bevorzugt zu mindestens 70 Mol %, ganz besonders bevorzugt zu mindestens 90 Mol % und insbesondere vollständig (100 mol %) mit einem geeigneten Neutralisationsmittel neutralisiert, d. h. sie liegen als Salz vor, wobei die Säuregruppe das Anion ist und das Neutralisationsmittel als Kation vorliegt. Neutralisationsmittel sind z.B. Ammoniak, Alkalihydroxide wie NaOH oder KOH oder Alkanolamine.

Das Polyurethan kann optional aus weiteren, von den Verbindungen a1) bis a3) verschiedenen Verbindungen a4) aufgebaut sein. Verbindungen a4) dienen z. B. der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.

Verbindungen a4) sind z.B. nicht-polymere Diole, welche z.B. ein Molekulargewicht von 60 bis 500 g/mol, vorzugsweise von 62 bis 200 g/mol aufweisen. Es können z.B. die Aufbaukomponenten der für die Herstellung von Polyesterdiolen genannten kurzkettigen Alkandiole eingesetzt, wobei Diole mit 2 bis 12 C-Atomen, unverzweigte Diole mit 2 bis 12 C-Atomen und einer gradzahligen Anzahl von C-Atomen sowie Pentan-1,5-diol und Neopentylglykol bevorzugt werden. Bevorzugt beträgt der Anteil der Dihydroxyverbindungen a2), bezogen auf die Gesamtmenge der Diole 10 bis 100 mol-% und der Anteil der nicht-polymeren Diole bezogen auf die Gesamtmenge der Diole 0 bis 90 mol-%. Besonders bevorzugt beträgt das molare Verhältnis der Dihydroxyverbindungen a2) zu den nicht-polymeren Diolen 0,1 : 1 bis 5:1, besonders bevorzugt 0,2 : 1 bis 2 : 1.

Verbindungen a4) sind z.B. auch Isocyanate, die neben freien Isocyanatgruppen weitere verkappte Isocyanatgruppen, z. B. Uretdiongruppen oder Carbodiimidgruppen tragen.

Alkohole mit einer höheren Wertigkeit als 2, die zur Einstellung eines Verzweigungs- oder Vernetzungsgrades dienen können, sind z. B. Trimethylolpropan, Glycerin oder Zucker.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt. Die Polyurethane können z.B. 1 bis 30 mol-%, besonders bevorzugt 4 bis 25 mol-%, bezogen auf die Gesamtmenge der gegenüber Isocyanaten reaktiven Gruppen mindestens eines Polyamins mit mindestens 2 gegenüber Isocyanaten reaktiven Aminogruppen als Monomere a4) enthalten.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diamino-propane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclo-hexylmethan, 1,4-Diaminocyclohexan, Aminoethylethanolamin, Hydrazin, Hydrazinhydrat oder Triamine wie Diethylentriamin oder 1,8-Diamino-4-aminomethyloctan. Die Amine können auch in blockierter Form, z.B. in Form der entsprechenden Ketimine (siehe z.B. CA-A 1,129,128), Ketazine (vgl. z.B. die US-A 4,269,748) oder Aminsalze (s. US-A 4,292,226) eingesetzt werden. Auch Oxazolidine, wie sie beispielsweise in der US-A 4,192,937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden. Bevorzugt werden Gemische von Di- und Triaminen verwendet, besonders bevorzugt Gemische von Isophorondiamin (IPDA) und Diethylentriamin (DETA).

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker. Für den gleichen Zweck können auch als Verbindungen a4) höher als zweiwertige Isocyanate eingesetzt werden. Handelsübliche Verbindungen sind beispielsweise das Isocyanurat oder das Biuret des Hexamethylendiisocyanats.

Als Verbindungen a4) kommen ferner Monoalkohole in Betracht, die neben der HydroxylGruppe eine weitere gegenüber Isocyanaten reaktive Gruppe tragen wie Monoalkohole mit einer oder mehreren primären und/oder sekundären Aminogruppen, z.B. Monoethanolamin.

Verbindungen a4), die optional mitverwendet werden können, sind auch Monoisocyanate, Monoalkohole und monoprimäre und monosekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethylbenzylisocyanat (TMI) und Ester von Acryl- oder Methacrylsäure wie Hydroxyethylacrylat oder Hydroxyethylmethacrylat.

Verbindungen a4) sind auch solche, welche mindestens eine Isocyanatgruppe oder eine mit Isocyanat reaktive Gruppe und eine andere hydrophile Gruppe, z. B. eine nicht-ionische oder eine kationische Gruppe haben. Als nichtionische hydrophile Gruppen kommen insbesondere Polyethylenglykolether aus vorzugsweise 5 bis 100, bevorzugt 10 bis 80 Ethylenoxid-Wiederholungseinheiten, in Betracht. Der Gehalt an Polyethylenoxid-Einheiten kann 0 bis 10, bevorzugt 0 bis 6 Gew.-%, bezogen auf die Gewichtsmenge aller Verbindungen a1) bis a4) betragen. Bevorzugte Monomere mit nichtionischen hydrophilen Gruppen sind Polyethylenoxiddiole, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US-A 3,905,929 und US-A 3,920,598 angegeben.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann. Normalerweise werden die Aufbaukomponenten sowie ihre jeweiligen Molmengen so gewählt, dass das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können
   0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Aufbaukomponenten des Polyurethans tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Vorzugsweise besteht das Polyurethan zu mindestens 50 Gew.-%, besonders bevorzugt zu mindestens 80 Gew.-% ganz besonders bevorzugt zu mindestens 90 Gew.-% oder zu 100 Gew.% aus Verbindungen a1) bis a3).

Der Gehalt an Verbindungen a4) ist vorzugsweise kleiner 10 Gew.-%, besonders bevorzugt kleiner 5 bzw. 2 Gew.-%, ganz besonders bevorzugt kleiner 1 Gew.-%, jeweils bezogen auf die Summe aller Aufbaukomponenten des Polyurethans. In einer besonders bevorzugten Ausführungsform ist das Polyurethan ausschließlich aus den Verbindungen a1) bis a3) aufgebaut.

Die Polyaddition der Aufbaukomponenten zur Herstellung des in den erfindungsgemäßen wässrigen Dispersionen vorliegenden Polyurethans kann bei Reaktionstemperaturen von 20 bis 180°C, bevorzugt 70 bis 150°C unter Normaldruck oder unter autogenem Druck erfolgen. Die erforderlichen Reaktionszeiten liegen üblicherweise im Bereich von 1 bis 20 Stunden, insbesondere im Bereich von 1,5 bis 10 Stunden. Es ist auf dem Gebiet der Polyurethanchemie bekannt, wie die Reaktionszeit durch Parameter wie Temperatur, Konzentration der Monomere, Reaktivität der Monomeren beeinflusst wird.

Die Umsetzung, d.h. die Polyaddition der Aufbaukomponenten zur Herstellung der Polyurethane kann mit Hilfe von organischen oder von organometallischen Verbindungen katalysiert werden. Geeignete Katalysatoren sind u.a. Dibutylzinndilaurat (DBTL), Zinn-II-octoat, Tetrabutoxytitan (TBOT) oder Diazabicyclo-(2,2,2)-octan. Geeignete Katalysatoren sind auch Salze des Cäsiums, insbesondere Cäsiumcarboxylate wie zum Beispiel das Formiat, Acetat, Propionat, Hexanoat oder das 2-Ethylhexanoat des Cäsiums.

Als Polymerisationsapparate zur Durchführung der Polyaddition, d.h. der Umsetzung der Monomere a), b), c) sowie gegebenenfalls d) und e) kommen Rührkessel in Betracht, insbesondere dann, wenn durch Mitverwendung von Lösungsmitteln für eine niedrige Viskosität und eine gute Wärmeabfuhr gesorgt ist. Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Die Dispersionen können z.B. nach einem der folgenden Verfahren hergestellt:
Nach dem sogenannten "Acetonverfahren" wird in einem mit Wasser mischbaren und bei Normaldruck unter 100°C siedenden Lösungsmittel aus den Aufbaukomponenten ein ionisches Polyurethan hergestellt. Es wird soviel Wasser zugegeben, bis sich eine Dispersion bildet, in der Wasser die kohärente Phase darstellt.

Das "Prepolymer-Mischverfahren" unterscheidet sich vom Acetonverfahren darin, dass nicht ein ausreagiertes (potentiell) ionisches Polyurethan, sondern zunächst ein Prepolymer hergestellt wird, das Isocyanat-Gruppen trägt. Die Komponenten werden hierbei so gewählt, dass das definitionsgemäße Verhältnis A : B größer 1,0 und bis 3, bevorzugt von 1,05 bis 1,5 beträgt. Das Prepolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen, die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Aminogruppen hydrolysiert, die mit noch verbliebenen Isocyanatgruppen der Prepolymere unter Kettenverlängerung abreagieren.

Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% auf und sind besonders bevorzugt frei von Lösungsmitteln. Unter Lösungsmitteln werden organische Lösungsmittel verstanden.

Die erhaltenen wässrigen Polyurethandispersionen haben vorzugsweise einen Feststoffgehalt von 10 bis 70, vorzugsweise von 30 bis 55 Gew.-%.

Die Polyurethane weisen in N,N-Dimethylformamid (DMF, 21°C) vorzugsweise einen K-Wert von 20 bis 60 auf. Der K-Wert ist eine relative Viskositätszahl, die in Analogie zur DIN 53 726 bei 25° bestimmt wird. Er enthält die Fließgeschwindigkeit einer 1 gew.-%igen Lösung des Polyurethans in DMF, relativ zur Fließgeschwindigkeit von reinem DMF und charakterisiert das mittlere Molekulargewicht des Polyurethans.

Die wässrige Klebstoffdispersion enthält mindestens einen nichtionischen Emulgator, ausgewählt aus ethoxylierten Fettalkoholen. Der Gehalt an ethoxylierten Fettalkoholen in der Dispersion beträgt vorzugsweise 0,5 bis 3% besonders bevorzugt von 0,5 bis 2 Gew.%, bezogen auf die festen Bestandteile in der Dispersion.

Geeignete Fettalkohole sind z.B. solche mit 4 bis 30, vorzugsweise 10 bis 18, insbesondere 16 bis 18 C-Atomen in der Fettkette. Der Ethoxylierungsgrad beträgt vorzugsweise von 8 bis 50. Ethoxylierte Fettalkohole sind z.B. solche der Formel
Z(OCH2 CH2)m-OH, wobei Z für eine Alkylgruppe steht mit 4 bis 30, vorzugsweise 10 bis 18, insbesondere 16 bis 18 C-Atomen und m eine Zahl ist von 1 bis 50, vorzugsweise von 8 bis 50. Geeignet sind z.B. die Ethoxylate von Butanol, Isobutanol, Hexanol, Octanol, Decanol, Dodecanol, Tetradecanol, Pentadecanol, Hexadecanol, Octadecanol, Eicosanol, Docosanol, Tetracosanol, and Triacontanol. Besonders bevorzugt sind Fettalkohole mit 16 bis 18 C-Atomen in der Fettkette und einem Ethoxylierungsgrad von 8 bis 50.

Die wässrige Klebstoffdispersion enthält vorzugsweise das Polyurethan a) in einer Menge von 30 bis 55% Gew.% bezogen auf die Klebstoffdispersion und den nichtionischen Emulgator b) in einer Menge von 0,5 bis 2 Gew.%, bezogen auf die Gesamtmenge an Feststoffen.

Eine bevorzugte wässrige Klebstoffdispersion ist dadurch gekennzeichnet, dass das Polyurethan a) aufgebaut ist aus
a1) mindestens einem organischen Diisocyanat, ausgewählt aus der Gruppe bestehend aus Hexamethylendiisocyanat, 5-Isocyanato-1-(isocyanatomethyl)-1,3,3-trimethylcyclohexan, 2,6-Diisocyanatotoluol, 2,4-Diisocyanatotoluol und Tetramethylxylylendiisocyanat oder deren Mischung,,
a2) mindestens einer Dihydroxyverbindung ausgewählt aus Adipinsäure-Butandiol-Polyester und Adipinsäure-Hexandiol-Polyester,
a3) mindestens einer Verbindung mit wenigstens einer gegenüber Isocyanatgruppen reaktiven Gruppe, die zusätzlich mindestens eine ionische Gruppe oder eine in eine ionische Gruppe überführbare Gruppe trägt, ausgewählt aus Diaminocarbonsäuren und Diaminosulfonsäuren,
a4) optional weiteren von a1) bis a3) verschiedenen Verbindungen,
   und die Dispersion
b) von 0,5 bis 2 Gew.%, bezogen auf die Gesamtmenge an Feststoffen mindestens einem nichtionischen Emulgator, ausgewählt aus C16- bis C18-Fettalkoholen mit einem Ethoxylierungsgrad von 8 bis 50 enthält.

Die wässrigen Polyurethandispersionen können ohne weitere Zusätze als Klebstoff verwendet werden. Sie können aber optional weitere Hilfs- und Zusatzstoffe enthalten. Als weitere Bestandteile zu nennen sind beispielsweise Vernetzer, Treibmittel, Entschäumer, weitere, von Emulgator b) verschiedene Emulgatoren, Verdickungsmittel, Thixotropiermittel, Farbmittel wie Farbstoffe und Pigmente, Weichmacher oder klebrigmachende Harze wie z.B. Naturharze oder modifizierte Harze wie Kolophoniumester oder synthetische Harze wie Phthalatharze. Die wässrige Zusammensetzung kann für die jeweilige Verwendung gewünschte Vernetzer z.B. Carbodiimide oder Aziridine enthalten.

Die wässrigen Zusammensetzungen bzw. Polyurethandispersionen eignen sich zur Beschichtung von festen Gegenständen oder flexiblen Folien bzw. Bahnen aus Metall, Kunststoff, Papier, Textil, Leder oder Holz. Sie können nach den allgemein üblichen Verfahren, also z. B. durch Sprühen oder Rakeln in Form eines Films auf diese Gegenstände aufgetragen und getrocknet werden. Die Trocknung kann bei Raumtemperatur oder auch bei erhöhter Temperatur erfolgen.

Die Klebstoffdispersionen können insbesondere verwendet werden als Kontaktklebstoffe (beidseitiger Kleberauftrag), Schaumklebstoffe (Klebstoff enthält Schäumungsmittel) oder als Kaschierklebstoffe, z. B. für Automobilinnenteile oder zur Möbelkaschierung oder für die Verbundfolienkaschierung. Als zu verklebende Substrate kommen z. B. solche aus Holz, Metall, Kunststoff, Faserformteilen, z.B. MDF-Platten, oder Papier in Betracht.

Insbesondere eignen sich die erfindungsgemäßen Polyurethandispersionen als Klebstoffe bzw. als Bindemittel für Klebstoffe, besonders bevorzugt sind Kaschierklebstoffe. Zu unterscheiden ist dabei zwischen den 1K und 2K-Systemen. Die wässrigen Zusammensetzungen eignen sich sowohl als 1K oder 2K Systeme. 1K-Systeme können einen Vernetzer enthalten und sind lagerstabil. Bei 2K-Systemen wird der Vernetzer erst kurz vor der Verwendung zugesetzt. Die Klebstoffdispersionen können auch frei sein von Verbindungen, welche mit dem Polyurethan unter Vernetzung reagieren. Die erfindungsgemäßen Polyurethandispersionen können dann vorzugsweise als einkomponentige (1K) Klebstoffe, insbesondere 1K-Kaschierklebstoffe verwendet werden.

Gegenstände aus Metall, Kunststoff, Papier, Leder, Holz oder Faserformteilen, wie z.B. MDF-Platten, lassen sich ebenfalls mit anderen Gegenständen, vorzugsweise den vorgenannten Gegenständen, verkleben, indem man die erfindungsgemäße wässerige Dispersion in Form eines Films auf mindestens einem dieser Gegenstände aufträgt und ihn vor oder nach dem Trocknen des Films mit einem anderen Gegenstand zusammenfügt. Vorzugsweise wird dabei der Film auf Temperaturen von 50 bis 150°C erhitzt.

Bei der Verwendung als Kaschierklebstoff für die Oberflächenveredlung eines festen Trägers mit einer Dekorationsfolie werden im allgemeinen Polymerfolien, Papier, insbesondere Dekorpapiere, welche mit einem Polymer getränkt oder beschichtet sind, oder Leder insbesondere mit Gegenständen aus Holz, worunter auch gebundene Holzfasermaterialien wie Spanplatten oder sonstige Platten aus Zellulosematerialien verstanden werden, Metall oder Kunststoff verklebt. Zum Beispiel werden Möbel, bzw. Möbelteile mit Papier oder Polymerfolien kaschiert oder Automobilinnenteile mit Polymerfolien aus PVC oder TPO kaschiert.

Besonders eignen sich die Polyurethandispersionen als Klebstoff für die Kaschierung von starren Formkörpern mit flexiblen Dekorationsfolien oder zur Herstellung von Verbundfolien. Die Folienwerkstoffe, die im Wesentlichen eingesetzt werden, sind Polyethylen, Polypropylen, insbesondere biaxial gerecktes Polypropylen (OPP), Polyamid, Polyester, PVC, Celluloseacetat, Zellglas und Metalle wie Zinn und Aluminium, insbesondere auch metallisierte Polymerfolien, z. B. metallisierte Polyolefinfolien oder Polyesterfolien. Die Polymerfolien, insbesondere Polyolefinfolien, können gegebenenfalls coronavorbehandelt sein.

Bei den 1K-Systemen ist es auch möglich, die erfindungsgemäße Zusammensetzung zunächst auf die zu kaschierende Polymerfolie oder das zu kaschierende Papier aufzubringen und die beschichtete Polymerfolie bzw. das beschichtete Papier zu lagern, bis zu einem späteren Zeitpunkt die Kaschierung, z.B. des Möbelteils oder Automobil-innenteil erfolgen soll.

Der Kaschierklebstoff wird vorzugsweise auf mindestens eines im allgemeinen nur auf eines der zu verklebenden Substrate aufgetragen. Die beschichteten Substrate werden im allgemeinen kurz getrocknet und dann vorzugsweise bei einer Temperatur von 30 bis 80°C miteinander bzw. mit unbeschichteten Substraten verpresst.

Die erfindungsgemäße Polyurethandispersion hat eine geringe Viskosität. Bei der Verwendung der erfindungsgemäßen Polyurethandispersion oder erfindungsgemäßen Zusammensetzungen als Klebstoff oder Kaschierklebstoff werden Verbunde mit hoher Festigkeit, insbesondere auch hoher Wärmestandfestigkeit, d.h. Festigkeit bei erhöhter Temperatur, erhalten. Die erfindungsgemäßen Zusammensetzungen sind als 1K-System (Vernetzer mit blockierten reaktiven Gruppen) lagerstabil und können auf die zu kaschierenden Polymerfolien oder Papier aufgebracht und so gelagert werden.

### Beispiele

Beispiel 1
   Wässrige Dispersion enthaltend
   (a) 40 Gewichtsteile Polyurethan, gebildet aus
      4 Gewichtsteilen Diisocyanatotoluol (2,4- oder 2,6-Diisocyanatotoluol),
      4 Gewichtsteilen Hexamethylendiisocyanat
      87 Gewichtsteilen Adipinsäure/Butandiol Polyester mit Molekularwicht Mn von 2400
      5 Gewichtsteilen des Natriumsalzes von Ethylendiaminmonopropionsäure
   (b) 1 Gew.% (bezogen auf Polyurethan) Lutensol® AT 18 (C16-18 Fettalkohol, ethoxyliert mit 18 Einheiten Ethylenoxid)
Beispiel 2
   Wässrige Dispersion enthaltend
   (a) 40 Gewichtsteile Polyurethan, gebildet aus
      4 Gewichtsteilen Diisocyanatotoluol (2,4- oder 2,6-Diisocyanatotoluol),
      4 Gewichtsteilen Hexamethylendiisocyanat
      87 Gewichtsteilen Adipinsäure/Butandiol Polyester mit Molekularwicht Mn von 2400
      5 Gewichtsteilen des Natriumsalzes von Ethylendiaminmonopropionsäure
   (b) 1 Gew.% (bezogen auf Polyurethan) Lutensol® AT 25 (C16-18 Fettalkohol,
      ethoxyliert mit 25 Einheiten Ethylenoxid)
Beispiel 3 (Vergleich; ohne Additiv)
   Wässrige Dispersion enthaltend
   40 Gewichtsteile Polyurethan, gebildet aus
   4 Gewichtsteilen Diisocyanatotoluol (2,4- oder 2,6-Diisocyanatotoluol),
   4 Gewichtsteilen Hexamethylendiisocyanat
   87 Gewichtsteilen Adipinsäure/Butandiol Polyester mit Molekularwicht Mn von 2400
   5 Gewichtsteilen des Natriumsalzes von Ethylendiaminmonopropionsäure
Beispiel 4(Vergleich)
   Wässrige Dispersion enthaltend
   (a) 40 Gewichtsteile Polyurethan, gebildet aus
      4 Gewichtsteilen Diisocyanatotoluol (2,4- oder 2,6-Diisocyanatotoluol),
      4 Gewichtsteilen Hexamethylendiisocyanat
      87 Gewichtsteilen Adipinsäure/Butandiol Polyester mit Molekularwicht Mn von 2400
      5 Gewichtsteilen des Natriumsalzes von Ethylendiaminmonopropionsäure
   (b) 1 Gew.% (bezogen auf Polyurethan) Pluronic® PE 6800 (nichtionisches Ethylenoxid/Propylenoxid (80:20) Blockcopolymer; Mw 1750)
Beispiel 5 (Vergleich)
   Wässrige Dispersion enthaltend
   (a) 40 Gewichtsteile Polyurethan, gebildet aus
      4 Gewichtsteilen Diisocyanatotoluol (2,4- oder 2,6-Diisocyanatotoluol),
      4 Gewichtsteilen Hexamethylendiisocyanat
      87 Gewichtsteilen Adipinsäure/Butandiol Polyester mit Molekularwicht Mn von 2400
      5 Gewichtsteilen des Natriumsalzes von Ethylendiaminmonopropionsäure
   (b) 1 Gew.% (bezogen auf Polyurethan) Pluronic® PE 10500 (nichtionisches Ethylenoxid/Propylenoxid (50:60) Blockcopolymer; Mw 3250)

### Messungen

### Scherstabilitätstest

Eine Probe der zu prüfenden Dispersion wird mit einer Disperserscheibe 10 min bei 10000 U/min geschert. Der LD-Wert vor und nach der Scherung wird gemessen. Eine Scherinstabilität äußert sich in einem Abfall des LD-Wertes (Mikrokoagulatbildung). Je geringer der Abfall, desto scherstabiler ist die Dispersion.

### LD-Wert

Lichtdurchlässigkeit; Messgröße, um Teilchengrößen in dispersen Systemen zu bestimmen. Hierbei wird die Polymerdispersion auf 0,01% Feststoffgehalt verdünnt und die Lichtdurchlässigkeit in % im Vergleich zu reinem Wasser gemessen.

### Schaumentwicklungstest

Es wird der Anstieg der Schaummenge (Erhöhung des Schaumvolumens in %) beim Scherstabilitätstest ermittelt.

### Elektrolytstabilitätstest

En Tropfen der zu untersuchenden Dispersion wird in eine Kalziumchloridlösung einer bestimmten Konzentration getropft und geschüttelt. Löst sich der Tropfen in der Lösung auf, ohne sichtbares Koagulat zu bilden, gilt diese Kalziumchloridkonzentration als verträglich. Je höher die maximal verträgliche Kalziumchloridkonzentration, desto elektrolytstabiler ist die Dispersion.

### Beispiele:

**PUD: Polyesterpolyurethandispersion bestehend aus TDI/HDI/Adipinsäurebutandiol/PUD-Salz (Luphen D 200 A)**

| | Additiv (1 Gew.% fest auf fest) | Scherstabilität (% LD-Abfall) | Elektrolytstabilität [g/l CaCl₂] | Schaumentwicklung [%] |
|---|---|---|---|---|
| Beispiel 1 | Lutensol® AT 18 | 2 | 0,4 | 100 |
| Beispiel 2 | Lutensol® AT 25 | 2 | 0,4 | 100 |
| Beispiel 3 (Vergleich) | - | 30 | 0,01 | 80 |
| Beispiel 4 (Vergleich) | Pluronic® PE6800 | 1 | 0,03 | 150 |
| Beispiel 5 (Vergleich) | Pluronic® PE10500 | 2 | 0,03 | 150 |

Die Zugabe der Lutensol®-Additive in den Beispielen 1 und 2 führt nicht zu einer Veränderung der Klebeigenschaften gegenüber Beispiel 3. Die relevanten Klebeigenschaften sind anwendungsspezifisch und beinhalten im Falle der Kaschieranwendungen Schälfestigkeiten, die bei Raumtemperatur oder bei 90°C unmittelbar nach der Herstellung des Laminats sowie 24 h nach Herstellung des Laminats ermittelt werden.

## Patentansprüche

1. Wässrige Klebstoffdispersion, enthaltend
a) mindestens ein dispergiertes Polyurethan, aufgebaut aus
a1) mindestens einem organischen Diisocyanat, ausgewählt aus Diisocyanaten der Formel X(NCO)₂, wobei X für einen nicht-cyclischen aliphatischen Kohlenwasserstoffrest mit 4 bis 15 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder für einen araliphatischen Kohlenwasserstoffrest mit 7 bis 15 Kohlenstoffatomen steht,
a2) mindestens einer Dihydroxyverbindung ausgewählt aus Polyesterdiolen und Polyetherdiolen, wobei die Polyesterdiole gebildet sind aus mindestens einer aliphatischen Dicarbonsäure und mindestens einem Alkandiol und die Polyetherdiole ausgewählt sind aus Polypropylenoxid und Polytetrahydrofuran,
a3) mindestens einer Verbindung mit wenigstens einer gegenüber Isocyanatgruppen reaktiven Gruppe, die zusätzlich mindestens eine ionische Gruppe oder eine in eine ionische Gruppe überführbare Gruppe trägt,
a4) optional weiteren von a1) bis a3) verschiedenen Verbindungen,
und
b) mindestens einem nichtionischen Emulgator, ausgewählt aus ethoxylierten Fettalkoholen.

2. Wässrige Klebstoffdispersion gemäß Anspruch 1, **dadurch gekennzeichnet, dass** die Dihydroxyverbindung a2 ein zahlenmittleres Molgewicht von 500 bis 5000 g/mol aufweist und keine ionische oder in eine ionische Gruppe überführbare Gruppe enthält.

3. Wässrige Dispersion gemäß Anspruch 1 oder 2, **dadurch gekennzeichnet, dass** das Polyurethan a) in einer Menge von 30 bis 55 Gew.% bezogen auf die Klebstoffdispersion und der nichtionische Emulgator b) in einer Menge von 0,5 bis 2 Gew.%, bezogen auf die Gesamtmenge an Feststoffen enthalten ist.

4. Wässrige Dispersion gemäß einem der vorhergehenden Ansprüche, **dadurch gekennzeichnet, dass** das Diisocyanat a1) ausgewählt ist aus der Gruppe bestehend aus Hexamethylendiisocyanat, 5-Isocyanato-1-(isocyanatomethyl)-1,3,3-trimethylcyclohexan, 2,6-Diisocyanatotoluol, 2,4-Diisocyanatotoluol und Tetramethylxylylendiisocyanat oder deren Mischung.

5. Wässrige Dispersion gemäß einem der vorhergehenden Ansprüche, **dadurch gekennzeichnet, dass** die Dihydroxyverbindung a2) ausgewählt ist aus Adipinsäure-Butandiol-Polyester und Adipinsäure-Hexandiol-Polyester.

6. Wässrige Dispersion gemäß einem der vorhergehenden Ansprüche, **dadurch gekennzeichnet, dass** Verbindung a3) ausgewählt ist aus Dihydroxycarbonsäuren, Diaminocarbonsäuren und Diaminosulfonsäuren.

7. Wässrige Dispersion gemäß einem der vorhergehenden Ansprüche, **dadurch gekennzeichnet, dass** der ethoxylierte Fettalkohol b) ausgewählt ist aus C16- bis C18 Fettalkoholen mit einem Ethoxylierungsgrad von 8 bis 50.

8. Wässrige Dispersion gemäß einem der vorhergehenden Ansprüche, **dadurch gekennzeichnet, dass** das Polyurethan
a) aufgebaut ist aus
a1) mindestens einem organischen Diisocyanat, ausgewählt aus der Gruppe bestehend aus Hexamethylendiisocyanat, 1-Isocyanato-3,5,5-trimethyl-5-isocyanatomethylcyclohexan, 2,6-Diisocyanatotoluol, 2,4-Diisocyanatotoluol und Tetramethylxylylendiisocyanat oder deren Mischung,
a2) mindestens einer Dihydroxyverbindung ausgewählt aus Adipinsäure-Butandiol-Polyester und Adipinsäure-Hexandiol-Polyester,
a3) mindestens einer Verbindung mit wenigstens einer gegenüber Isocyanatgruppen reaktiven Gruppe, die zusätzlich mindestens eine ionische Gruppe oder eine in eine ionische Gruppe überführbare Gruppe trägt, ausgewählt aus Diaminocarbonsäuren und Diaminosulfonsäuren,
a4) optional weiteren von a1) bis a3) verschiedenen Verbindungen,
und die Dispersion
b) von 0,5 bis 2 Gew.%, bezogen auf die Gesamtmenge an Feststoffen mindestens einem nichtionischen Emulgator, ausgewählt aus C16- bis C18 Fettalkoholen mit einem Ethoxylierungsgrad von 8 bis 50 enthält.

9. Verwendung der Dispersion gemäß einem der vorhergehenden Ansprüche als Kaschierklebstoff, insbesondere für die Verbundfolienkaschierung oder für die Kaschierung von starren Formkörpern mit flexiblen Dekorationsfolien.

## Claims

1. An aqueous adhesive dispersion comprising
a) at least one dispersed polyurethane constructed from
a1) at least one organic diisocyanate, selected from diisocyanates of the formula X(NCO)₂, where X is a noncyclic aliphatic hydrocarbon radical having 4 to 15 carbon atoms, a cycloaliphatic hydrocarbon radical having 6 to 15 carbon atoms, an aromatic hydrocarbon radical having 6 to 15 carbon atoms, or an araliphatic hydrocarbon radical having 7 to 15 carbon atoms,
a2) at least one dihydroxy compound selected from polyester diols and polyether diols, the polyester diols being formed from at least one aliphatic dicarboxylic acid and at least one alkanediol, and the polyetherdiols being selected from polypropylene oxide and polytetrahydrofuran,
a3) at least one compound having at least one group reactive toward isocyanate groups, and additionally carrying at least one ionic group or one group which can be converted into an ionic group,
a4) optionally further compounds different from a1) to a3),
and
b) at least one nonionic emulsifier selected from ethoxylated fatty alcohols.

2. The aqueous adhesive dispersion according to claim 1, wherein the dihydroxy compound a2 has a number-average molar weight of 500 to 5000 g/mol and comprises no ionic group or group which can be converted into an ionic group.

3. The aqueous dispersion according to claim 1 or 2, wherein the polyurethane a) is comprised in an amount of 30 to 55 weight% based on the adhesive dispersion, and the nonionic emulsifier b) is comprised in an amount of 0.5 to 2 weight%, based on the total amount of solids.

4. The aqueous dispersion according to any of the preceding claims, wherein the diisocyanate a1) is selected from the group consisting of hexamethylene diisocyanate, 5-isocyanato-1-(isocyanatomethyl)-1,3, 3-trimethylcyclohexane, 2,6-diisocyanatotoluene, 2,4-diisocyanatotoluene, and tetramethylxylylene diisocyanate, or a mixture thereof.

5. The aqueous dispersion according to any of the preceding claims, wherein the dihydroxy compound a2) is selected from adipic acid-butanediol polyester and adipic acid-hexanediol polyester.

6. The aqueous dispersion according to any of the preceding claims, wherein compound a3) is selected from dihydroxycarboxylic acids, diaminocarboxylic acids, and diaminosulfonic acids.

7. The aqueous dispersion according to any of the preceding claims, wherein the ethoxylated fatty alcohol b) is selected from C16 to C18 fatty alcohols with a degree of ethoxylation of 8 to 50.

8. The aqueous dispersion according to any of the preceding claims, wherein polyurethane
a) is constructed from
a1) at least one organic diisocyanate selected from the group consisting of hexamethylene diisocyanate, 1-isocyanato-3,5,5-trimethyl-5-isocyanatomethylcyclohexane, 2,6-diisocyanatotoluene, 2,4-diisocyanatotoluene, and tetramethylxylylene diisocyanate, or a mixture thereof,
a2) at least one dihydroxy compound selected from adipic acid-butanediol polyester and adipic acid-hexanediol polyester,
a3) at least one compound having at least one group reactive toward isocyanate groups, and additionally carrying at least one ionic group or one group which can be converted into an ionic group, selected from diaminocarboxylic acids and diaminosulfonic acids,
a4) optionally further compounds different from a1) to a3),
and the dispersion comprises
b) from 0.5 to 2 weight%, based on the total amount of solids, of at least one nonionic emulsifier selected from C16 to C18 fatty alcohols with a degree of ethoxylation of 8 to 50.

9. The use of the dispersion according to any of the preceding claims as a laminating adhesive, more particularly for composite film lamination or for the lamination of rigid moldings with flexible decorative foils.

## Revendications

1. Dispersion aqueuse d'adhésif, contenant :
a) au moins un polyuréthane dispersé, formé par :
a1) au moins un diisocyanate organique, choisi parmi les diisocyanates de formule X(NCO)₂, X représentant un radical hydrocarboné aliphatique non cyclique de 4 à 15 atomes de carbone, un radical hydrocarboné cycloaliphatique de 6 à 15 atomes de carbone, un radical hydrocarboné aromatique de 6 à 15 atomes de carbone ou un radical hydrocarboné araliphatique de 7 à 15 atomes de carbone,
a2) au moins un composé dihydroxy choisi parmi les polyester-diols et les polyéther-diols, les polyester-diols étant formés par au moins un acide dicarboxylique aliphatique et au moins un alcane-diol, et les polyéther-diols étant choisis parmi le polyoxyde de propylène et le polytétrahydrofurane,
a3) au moins un composé contenant au moins un groupe réactif avec les groupes isocyanate, qui porte en outre au moins un groupe ionique ou un groupe transformable en un groupe ionique,
a4) éventuellement d'autres composés différents de a1) à a3),
et
b) au moins un émulsifiant non ionique, choisi parmi les alcools gras éthoxylés.

2. Dispersion aqueuse d'adhésif selon la revendication 1, **caractérisée en ce que** le composé dihydroxy a2 présente un poids moléculaire moyen en nombre de 500 à 5 000 g/mol et ne contient pas de groupe ionique ou transformable en un groupe ionique.

3. Dispersion aqueuse selon la revendication 1 ou 2, **caractérisée en ce que** le polyuréthane a) est contenu en une quantité de 30 à 55 % en poids, par rapport à la dispersion d'adhésif, et l'émulsifiant non ionique b) est contenu en une quantité de 0,5 à 2 % en poids, par rapport à la quantité totale de solides.

4. Dispersion aqueuse selon l'une quelconque des revendications précédentes, **caractérisée en ce que** le diisocyanate a1) est choisi dans le groupe constitué par le diisocyanate d'hexaméthylène, le 5-isocyanato-1-(isocyanatométhyl)-1,3,3-triméthylcyclohexane, le 2,6-diisocyanatotoluène, le 2,4-diisocyanatotoluène et le diisocyanate de tétraméthylxylylène ou leur mélange.

5. Dispersion aqueuse selon l'une quelconque des revendications précédentes, **caractérisée en ce que** le composé dihydroxy a2) est choisi parmi le polyester d'acide adipique et de butanediol et le polyester d'acide adipique et d'hexanediol.

6. Dispersion aqueuse selon l'une quelconque des revendications précédentes, **caractérisée en ce que** le composé a3) est choisi parmi les acides dihydroxycarboxyliques, les acides diaminocarboxyliques et les acides diaminosulfoniques.

7. Dispersion aqueuse selon l'une quelconque des revendications précédentes, **caractérisée en ce que** l'alcool gras éthoxylé b) est choisi parmi les alcools gras en C16 à C18 ayant un degré d'éthoxylation de 8 à 50.

8. Dispersion aqueuse selon l'une quelconque des revendications précédentes, **caractérisée en ce que** le polyuréthane
a) est formé par :
a1) au moins un diisocyanate organique, choisi dans le groupe constitué par le diisocyanate d'hexaméthylène, le 1-isocyanato-3,5,5-triméthyl-5-isocyanatométhylcyclohexane, le 2,6-diisocyanatotoluène,
le 2,4-diisocyanatotoluène et le diisocyanate de tétraméthylxylylène ou leur mélange,
a2) au moins un composé dihydroxy choisi parmi le polyester d'acide adipique et de butanediol et le polyester d'acide adipique et d'hexanediol,
a3) au moins un composé contenant au moins un groupe réactif avec les groupes isocyanate, qui porte en outre au moins un groupe ionique ou un groupe transformable en un groupe ionique, choisi parmi les acides diaminocarboxyliques et les acides diaminosulfoniques,
a4) éventuellement d'autres composés différents de a1) à a3),
et la dispersion contient
b) de 0,5 à 2 % en poids, par rapport à la quantité totale de solides, d'au moins un émulsifiant non ionique, choisi parmi les alcools gras en C16 à C18 ayant un degré d'éthoxylation de 8 à 50.

9. Utilisation de la dispersion selon l'une quelconque des revendications précédentes en tant qu'adhésif de contre-collage, notamment pour le contre-collage de films composites ou pour le contre-collage de corps moulés rigides avec des films décoratifs flexibles.
